# EUROPÄISCHE PATENTSCHRIFT

(11) **EP 0 771 502 B1**
(45) Veröffentlichungstag und Bekanntmachung des Hinweises auf die Patenterteilung: **12.07.2000**
(21) Anmeldenummer: 95916565.5
(22) Anmeldetag: 28.04.1995
(51) Int. Cl.: H04M 11/02

(54) **KLINGELANLAGE UND/ODER VIELFACHTÜRSPRECHANLAGE**
BELL SYSTEM AND/OR MULTIPLE DOOR INTERCOM SYSTEM
SYSTEME DE SONNETTE ET/OU SYSTEME DE PORTIER MULTIPLE

(30) Priorität: 18.07.1994 DE 4425309
(43) Veröffentlichungstag der Anmeldung: 07.05.1997
(73) Patentinhaber: Trautvetter, Manfred, 99089 Erfurt (DE)
(72) Erfinder: Trautvetter, Manfred, 99089 Erfurt (DE)
(74) Vertreter: Liedtke, Klaus, Dr.
(86) Internationale Anmeldenummer: DE9500553
(87) Internationale Veröffentlichungsnummer: WO9602998

(56) Entgegenhaltungen:
- EP-A- 0 032 982
- WO-A-88/02968
- FR-A- 2 687 298
- FR-A- 2 693 759

## Beschreibung

Die Erfindung betrifft eine Türsprech- und Klingelanlage mit einer Tastaturanordnung, die mit mindestens einem Kennzeichnungsschild versehen ist.

Im Stand der Technik sind Klingel- und Vielfachtürsprechanlagen in vielfältigen Ausführungen bekannt, die eine gemeinsame Aufnahme einzelner Funktionseinheiten wie Namensschilder, Klingeltasten, Türlautsprecher und dergleichen aufweisen.

Nach DE 83 55 428 U1 ist es ferner bekannt, in den Tastern Beleuchtungen anzubringen. Weiterhin ist in DE 81 07 819 Ul eine Anordnung beschrieben, bei der eine Wohnungsklingel mit einer Kontrolleinrichtung versehen ist, die eine Unterscheidung ermöglicht, ob vor der Haustür oder vor der Wohnungstür geklingelt wurde. Dies geschieht hierbei dadurch, daß die Klingel zwei Läutwerke mit verschiedenen akustischen Signalen beinhaltet, die in einer gemeinsamen Phase integriert sind, welche auch noch die internen Steuerungsdioden beinhaltet, während die externen Dioden zusammengehöriger Bestandteil der Wohnungsklingel sind.

Bei den im Stand der Technik bekannten Anordnungen ist nachteilig, daß sie nur für verhältnismäßig wenig Wohnungen geeignet sind, weil sie entweder nur eine Verbindung der Klingel mit einer Wohnung ermöglichen oder bei Verknüpfung mehrerer Wohnungen miteinander einen sehr hohen Leitungs- und mechanischen Aufwand erfordern. Außerdem ist es in diesem Fall erforderlich, daß in jeder Wohnung Drähte individuell verknüpft werden müssen.

In EP-A-0 032 982 ist eine Hausanlage zur Übertragung von Informationen beschrieben, mit mehreren miteinander verbundenen Teilnehmerstellen und einer elektrischen Stromversorgung, wobei an jeder Teilnehmerstelle eine im wesentlichen identisch aufgebaute, hochintegrierte Schaltung vorgesehen ist, an welche die einzelnen gewünschten Funktionsblöcke angeschlossen sind. Diese hochintegrierten Schaltungen stehen über ein einziges Übertragungsmedium unter Zwischenschaltung von Kopplungselementen miteinander in Verbindung.

Im Stand der Technik sind ferner Telefonanlagen bekannt, bei denen Bestandteile einer Türsprechanlage als zusätzliche Komponenten an die Telefonanlage angeschlossen sind. Das Telefon ist dabei über eine spezielle Anschlußdose mit der Telefonanlage verbunden, die sowohl mit dem öffentlichen Telefonnetz als auch mit der Türsprechanlage verbunden ist. Das Steuern der Türsprechanlage wird durch zusätzliche Leitungen zwischen Telefon und Anlage ermöglicht. Es sind ferner Telefonanlagen bekannt, in denen die Türsprechstelle über ein Zweileiterinterface an die Telefonanlage angeschlossen ist.

Bei den bekannten Anordnungen ist nachteilig, daß dort zusätzliche Leitungen zwischen dem Telefon und der Anlage benötigt werden.

Der Erfindung liegt die Aufgabe zugrunde, eine Türsprech- und Klingelanlage zu schaffen, die es ermöglicht, neben der Klingel weitere Zusatzfunktionen anzuordnen und dabei zusätzlichen Verdrahtungsaufwand weitgehend zu vermeiden und die eine ständige Aktualisierung in einfacher Weise ermöglicht.

Erfindungsgemäß gelingt die Lösung der Aufgabe dadurch, daß als Kennzeichnungsschilder elektronisch angesteuerte Anzeigen angebracht sind und daß an der Anlage elektronisch angesteuerte Anzeigen einer Briefkastenbeschilderung angeschlossen sind.

Weitere vorteilhafte Ausgestaltungen der Erfindung sind in den Ansprüchen 2 bis 6 angegeben.

Dabei ist es beispielsweise möglich, daß als Kennzeichnungsschild eine elektronisch angesteuerte Anzeige angebracht ist und/oder daß die Kennzeichnungsschilder über ein Bussystem mit Microcontrollern verbunden sind. Die Verbindung kann auch ohne Bussystem erfolgen.
Als elektronische Anzeige können LCD-Anzeigen, LED-Anzeigen, Floureszenzanzeigen oder auch auf mechanischen oder mikromechanischen Wirkprinzipien basierende Anzeigen verwendet werden.
Die Verbindung zwischen den Anschlußstellen kann beispielsweise über eine sechsadrige Leitung erfolgen.
Weiterhin ist es möglich, daß an der Anlage zusätzlich Sprechstellen angeschlossen sind.

Die erfindungsgemäße Anlage zeichnet sich infolge der geringen Anzahl mechanischer Verbindungsstellen durch eine hohe Betriebszuverlässigkeit und eine hohe Standfestigkeit über längere Zeiträume aus.

Ein weiterer wesentlicher Vorteil der erfindungsgemäßen Anlage entsteht dadurch, daß die sonst erforderliche aufwendige manuelle Beschriftung von Klingel- und Briefkastenschildern besonders in Wohnhochhäusern elektronisch vorgenommen werden kann. Damit kann beim Wechsel eines Wohnungsinhabers eine einfache Umprogrammierung vorgenommen werden, wobei außerdem ein einheitliches Beschriftungsbild gewahrt wird.
Es ist dabei vorteilhaft, die elektronische Anzeige zweizeilig auszuführen.
Ferner ist es möglich, daß an der Klingelanlage zusätzlich eine mit elektronischer Anzeige versehene Briefkastenbeschilderung verbunden ist, welche über den gleichen Bus angeschlossen ist.
Eine vorteilhafte Ausführung der erfindungsgemäßen Klingelanlage sieht vor, daß an der Klingelanlage zusätzliche Sensoren angebracht sind.

Die erfindungsgemäße Anlage weist gegenüber den im Stand der Technik bekannten Einrichtungen eine Reihe von Vorteilen auf.

Mit der Anlage können beliebig viele Teilnehmer ohne großen mechanischen Aufwand mit einer einzigen Anlage verbunden werden. Die Anlage ist insbesondere auch für Hochhäuser gut geeignet.
Das Kommunikationssystem ist in der Lage, sich selbst zu überwachen und entsprechende Störungen zu signalisieren. Ferner ist die Überprüfung der gesamten Hausanlage an einer zentralen Stelle möglich, ohne daß Wohnungen betreten werden müssen. Ein wichtiger Vorzug der Anlage ist auch, daß eine Reihe von Zusatzfunktionen problemlos integriert werden können. Es ist beispielsweise möglich, Sensoren zur Ermittlung von Feuchte, Brand, Diebstahl, eine Taste für medizinische Notfälle sowie Signale für Gehörgeschädigte (z.B. Blitzsignale und Displayanzeigen) in die Anlage einzubeziehen. Durch das erfindungsgemäße Bussystem ist es möglich, jede Verbindung mit lediglich einer Sechsdrahtleitung anzuschließen. Besonders vorteilhaft ist dabei, daß die Anlage auch mit einer Zwangsempfangsschaltung für Informationen im Brandfall ausgerüstet werden kann. Dabei ist es sogar möglich, zur Steuerung des Personenstromes eine etagenweise Information zu übermitteln. Diese Information kann zweckmäßigerweise von einer im Brandfall zugängigen Stelle, z.B. im Hausmeisterraum im Erdgeschoß, gegeben werden.

Weitere vorteilhafte Ausführungen der erfindungsgemäßen Anlage sehen vor, daß das in der Wohnung vorhandene Telefon mit einer Haustelefon-Anschalteinheit verbunden ist, wobei sich in der Haustelefon-Anschalteinheit ein Umschalter befindet, mit dem das Telefon in Ruhelage mit dem öffentlichen Telefonnetz und in Arbeitsstellung mit der Türsprechanlage verbunden ist und wobei der Umschalter von der Türsprechstelle und/oder vom Telefon ansteuerbar ist.
Eine vorteilhafte Ausgestaltung der erfindungsgemäßen Türanlage entsteht dadurch, daß die Haustelefon-Anschalteinheit eine Schaltungsanordnung zum Erkennen von Tastenbetätigungen, einen Rufgenerator und eine Anpassungsschaltung zum Einkoppeln von Signalen, über die das Telefon gesteuert wird, beinhaltet.

Besonders vorteilhaft ist, daß als Telefone handelsübliche Telefonapparate eingesetzt werden können. Dabei sind übliche a-b-Telefone, ISDN-Telefone, drahtlose Telefone oder Bildtelefone einsetzbar. Es ist auch möglich anstelle eines Telefons einen Anrufbeantworter zu verwenden. Weiterhin ist vorteilhaft, daß am Telefon keine weiteren Tasten erforderlich sind. Die Sprecheinrichtung der Türsprechanlage kann bei der erfindungsgemäßen Anlage in einfacher Weise in Telefon-Zweileitertechnik ausgeführt werden. Weiterhin ist vorteilhaft, daß die Türsprechanlage in einfacher Weise wie ein normales TAE-Endgerät - das heißt wie z.B. ein Modem oder ein Faxgerät - über die in der Wohnung installierte TAE-Dose mit dem Telefon verbunden werden kann.

Bei den bekannten Türsprechanlagen ist die Einbeziehung des Telefons in eine Türsprechanlage nur über eine komplette hausinstallierte Telefonanlage möglich. Die Türsprechanlage ist als zusätzliche Komponente an eine Telefonanlage angeschlossen. Das Telefon ist dabei über eine spezifische Anschlußdose mit der Telefonanlage verbunden. Die Telefonanlage ist sowohl mit dem Postanschluß als auch mit der Türsprechanlage verbunden. Durch zusätzlich angebrachte Leitungen zwischen dem Telefon und der Telefonanlage wird die Übertragung von Steuersignalen an die Türsprechanlage ermöglicht. Solche Steuersignale können z.B. das Öffnen der Tür veranlassen.

Bei der erfindungsgemäßen Türsprechanlage wird als Haustelefon ein normales Telefon für die Türsprechanlage verwendet. Das Telefon ist über eine übliche TAE-Dose mit dem Postanschluß verbunden. Die Ankopplung wird dadurch ermöglicht, daß das Telefon über einen Umschalter mit dem Postanschluß verbunden wird. Dieser Umschalter ist Bestandteil einer Haustelefon-Anschalteinheit. In der Ruhestellung des Umschalters ist das Telefon mit dem Postanschluß verbunden. In Arbeitsstellung des Umschalters wird das Telefon vom Postanschluß getrennt und die Türsprechanlage angesteuert. Zur Ansteuerung ist entweder die Haustelefon-Anschalteinheit oder die Türsprechanlage mit einer speziellen Schaltung ausgerüstet, die das Erkennen von Tastenbetätigungen auf dem Telefon ermöglicht, womit bestimmte Funktionen der Türsprechanlage wie z.B. "Tür öffnen", "Türsprechstelle einschalten" und ähnliches gesteuert werden. Weiterhin verfügt die Haustelefon-Anschalteinheit oder die Türsprechanlage über einen Rufgenerator, über den das Telefon zum Läuten gebracht werden kann, sowie über eine Anpassungsschaltung zum Einkoppeln von Sprach- u.a. Signalen, über die das Telefon gesteuert werden kann. Der in der Haustelefon-Anschalteinheit angeordnete Umschalter wird von einem Relais gebildet, welches entweder von der Türsprechanlage oder vom Telefon angesteuert wird.

Es ist auch möglich, das die Telefone über ein Bus-system mit der Türstation verbunden sind. Das Bus-system kann als Zweileitersystem ausgeführt sein. Zur Unterbindung von ungewollten Querverbindungen zwischen den einzelnen Telefonen werden in einer gesonderten Schaltungsausführung die Telefone über einen Schalter mit dem Bussystem verbunden.
Eine weitere Ausführungsform für die erfindungsgemäße Türsprechanlage sieht vor, daß die Türstation über eine Anschalteinheit, beispielsweise einem Voice-Modem mit einem öffentlichen Kommunikationsnetz verbunden ist. Die in den Wohnungen installierten Telefone werden dann über dieses öffentliche Kommunikationsnetz angesteuert. Hierbei ist es auch möglich, Rufumleitungen vorzusehen.

Die Erfindung wird im folgenden anhand von Ausführungsbeispielen näher erläutert. Die zugehörigen Zeichnungen zeigen:
Figur 1 eine Anlage bestehend aus Taste, Klingel und Bus-System,
Figur 2 eine Anlage bestehend aus Taste, Klingel, einem Microcontroller und Bus-System,
Figur 3 eine Anlage, bei der Taster bzw. die Klingel über einen Microcontroller mit dem Bus verbunden sind,
Figur 4 die erfindungsgemäßen Namensschilder mit einer elektronisch angesteuerten Anzeige,
Figur 5 eine Anlage mit angeschlossenen Sensoren,
Figur 6 eine Anlage mit angeschlossenem Kartenleser,
Figur 7 eine Anlage mit angeschlossenem Türöffnersystem,
Figur 8 eine Anlage mit Türsprecheinrichtung und Innensprechstellen,
Figur 9 eine Anlage mit Lautsprecher,
Figur 10 eine Anlage die an das Telefonnetz angeschlossen ist.

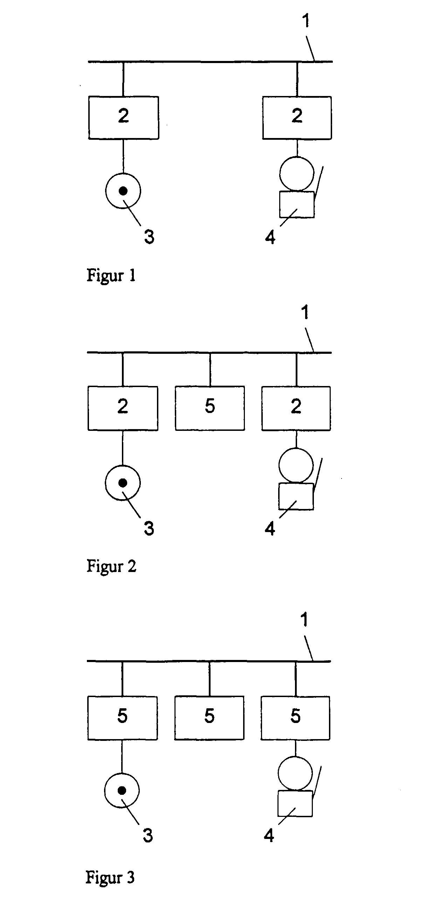

In Figur 1 ist die Grundvariante der erfindungsgemäßen Klingelanlage dargestellt. Hierbei sind Klingeltaster 3 und Klingel 4 mit dem Bus 1 verbunden. Klingeltaster 3 und Klingel 4 sind dabei über eine Anschlußelektronik 2 an den Bus 1 angeschlossen. In bestimmten Fällen ist es auch zweckmäßig, das Einschreiben ferngesteuert durchzuführen.
Bei der nach Figur 2 ausgeführten Anordnung ist an dem Bus zusätzlich ein Microcontroller 5 angeschlossen.
Eine weitere Ausführungsmöglichkeit ist in Figur 3 dargestellt. Hierbei wird die Ansteuerelektronik, die die Klingeltaste 3 und die Klingel 4 mit dem Bus 1 verbindet, jeweils durch einen Microcontroller 5 gebildet.

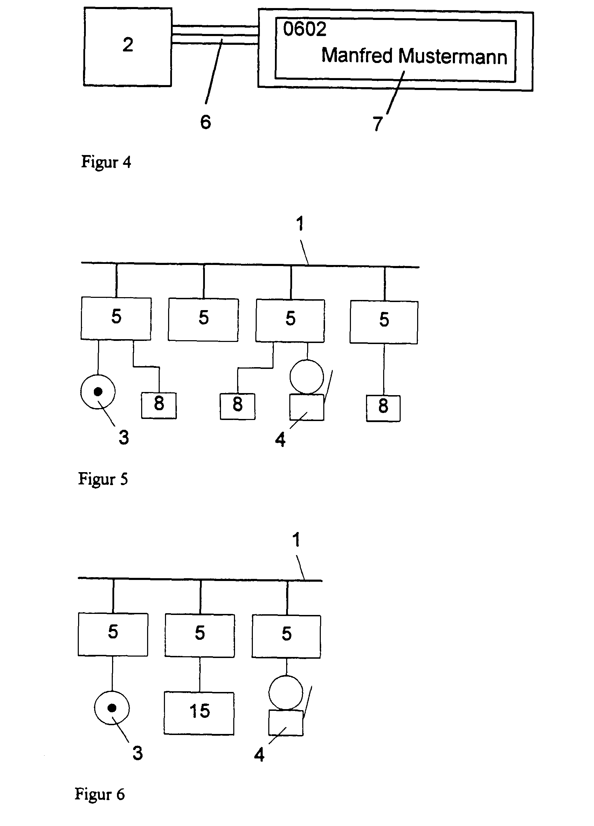

Figur 4 zeigt eine Ausführungsform für ein Kennzeichnungsschild. Das Kennzeichnungsschild ist hier ein Namensschild und besteht aus einer elektronisch angesteuerten Anzeige. Die elektronisch angesteuerte Anzeige ist über Verbindungsleitungen 6 mit der Anschaltelektronik 2 verbunden.
Figur 5 zeigt ein Ausführungsbeispiel der erfindungsgemäßen Anlage mit angeschlossenen Sensoren 8. Dabei ist es möglich, verschiedene Sensoren 8 zur Erfassung von Notsituationen wie Feuer, Wasserschäden und dergleichen in die Anlage einzubeziehen. Das Einschreiben der Namen in die elektronische Beschilderung kann mit Hilfe einer speziellen Tastatur oder mit einem Personalcomputer vorgenommen werden.

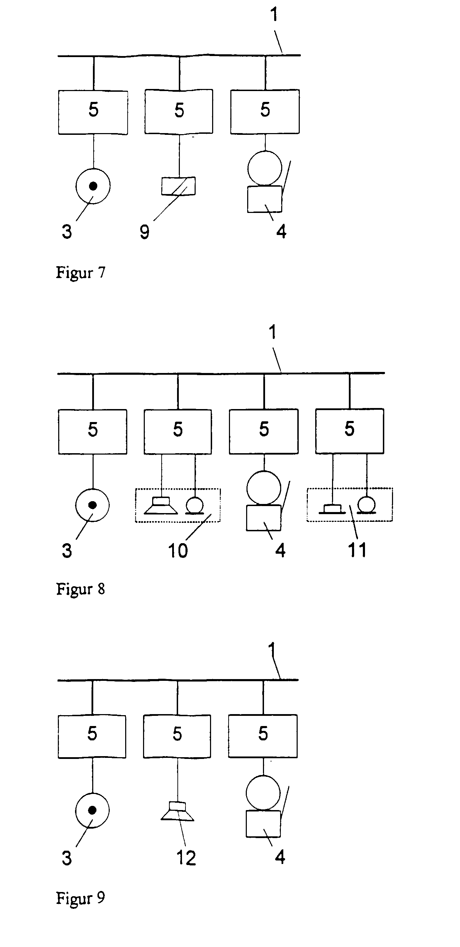

In den Figuren 6 und 7 sind weitere Erweiterungsmöglichkeiten der Anlage dargestellt. Die Anlage kann beispielsweise durch Kartenleser 15 oder durch Türöffner 9 erweitert werden. Damit ist es möglich, auch Schließfunktionen in die Anlage einzubeziehen. Figur 8 zeigt eine Ausführungsform der Anlage, bei der eine Sprechanlage integriert wurde. Hierzu sind an den Eingangstüren Türsprechstellen 10 und in den Wohnungen, Kellern und anderen Orten des Hauses Innensprechstellen 11 angebracht. Damit wird es möglich, eine Klingelanlage und eine Türsprechanlage gemeinsam zu betreiben. Die Steuerung der Anlage erfolgt über den Bus 1.

Bei der in Figur 9 dargestellten Ausführungsform sind ein oder mehrere Lautsprecher 12 in die Anlage einbezogen. Dadurch wird es möglich, die Anlage dazu zu benutzen, unabhängig von den Handlungen der Bewohner im Katastrophenfall Anweisungen in das Gebäude oder in einzelne Gebäudeteile wie Wohnungen, Keller und dergleichen zu übermitteln.

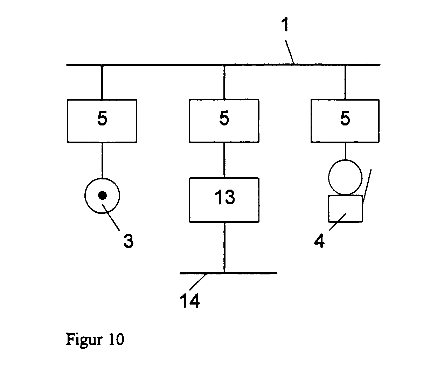

Figur 10 zeigt eine Ausführungsform, bei der die erfindungsgemäße Klingelanlage an das Telefonnetz 14 angeschlossen ist. Die Klingelanlage kann dabei über den Bus 1 direkt mit Hilfe einer Anschalteinheit 13 oder indirekt über weitere hier nicht dargestellte geeignete Anlagen mit dem Telefonnetz verbunden sein. Die Telefonanlage kann beispielsweise dazu verwendet werden, die elektronische Beschilderung zu verändern. Dies ermöglicht sowohl das Aktualisieren von Namen der Anlage sowie die einfache Durchführung von Wartungsarbeiten. Es ist auch möglich, die Klingelanlagen ohne Bus an das Telefonnetz 14 anzukoppeln. Bei der Benutzung der Anlage als Alarmierungssystem können aufgelaufene und im Katastrophenfall per Telefon oder drahtlos Hinweise an die Bewohner übermittelt werden.

### BEZUGSZEICHENLISTE

- 1: Bus
- 2: Anschaltelektronik
- 3: Klingeltaster
- 4: Klingel
- 5: Microcontroller
- 6: Verbindungsleitungen
- 7: Anzeigebaustein
- 8: Sensor
- 9: Türöffner
- 10: Türsprechstelle
- 11: Innensprechstelle
- 12: Lautsprecher
- 13: Anschalteinheit
- 14: Telefonnetz
- 15: Kartenleser

## Patentansprüche

1. Türsprech- und Klingelanlage mit einer Tastaturanordnung, die mit mindestens einem Kennzeichnungsschild versehen ist, wobei die Tastaturanordnung und eine Rufeinrichtung in einer Wohnung über ein Bus-System mit einem Mikrocontroller verbunden sind, **dadurch gekennzeichnet**, daß als Kennzeichnungsschilder elektronisch angesteuerte Anzeigen (7) angebracht sind und daß an der Anlage elektronisch angesteuerte Anzeigen (7) einer Briefkastenbeschilderung angeschlossen sind.

2. Anlage nach Anspruch 1, **dadurch gekennzeichnet,** daß die elektronische Anzeige (7) zweizeilig ausgeführt ist.

3. Anlage nach Anspruch 1 oder 2, **dadurch gekennzeichnet**, daß für mehrere Kennzeichnungsschilder eine gemeinsame elektronische Anzeige (7) angeordnet ist.

4. Anlage nach einem der Ansprüche 1 bis 3, **dadurch gekennzeichnet,** daß im Haus Lautsprecher (12) angeordnet sind, die über Anschalteinheiten mit der Türsprecheinrichtung verbunden sind.

5. Anlage nach einem der Ansprüche 1 bis 4, **dadurch gekennzeichnet**, daß die Anlage mit mindestens einem an ein öffentliches Telefonnetz (14) angeschlossenes Telefon verbunden ist, wobei das in der Wohnung vorhandene Telefon mit einer Haustelefonanschalteinheit verbunden ist, in der sich ein Umschalter befindet, mit dem das Telefon in einer Stellung mit dem öffentlichen Telefonnetz (14) und in einer anderen Stellung mit der Türsprechanlage verbunden ist und wobei der Umschalter von der Türsprechstelle und/oder vom Telefon ansteuerbar ist.

6. Anlage nach einem der Ansprüche 1 bis 5, **dadurch gekennzeichnet**, daß die Haustelefonanschalteinheit eine Schaltungsanordnung zum Erkennen von Tastenbetätigungen, einen Rufgenerator und eine Anpassungsschaltung zum Einkoppeln von Signalen, über die das Telefon gesteuert wird, beinhaltet.

## Claims

1. Door telephone and bell system with an array of keys which is provided with at least one identification sign, wherein the array of keys and a calling device in an apartment are connected via a bus system to a microcontroller, **in which** electronically controlled displays (7) are attached as identification signs, and in which electronically controlled displays (7) of a mail box labelling are connected to the system.

2. System according to claim 1 **in which** the electronic display (7) is designed with two lines.

3. System according to claim 1 or 2 **in which** a common electronic display (7) is arranged for a plurality of identification signs.

4. System according to one of the claims 1 to 3 **in which** loudspeakers (12) are arranged in the house which are connected to the door telephone device by connecting units.

5. System according to one of the claims 1 to 4 **in which** the system is connected to at least one telephone which is connected to a public telephone network (14), whereby the telephone located in the apartment is connected to a house-telephone connecting unit in which there is a change-over switch which in one position connects the telephone to the public telephone network (14) and in another position to the door telephone system and whereby the change-over switch can be controlled from the door telephone system and/or from the telephone.

6. System according to one of the claims 1 to 5 **in which** the house-telephone connection unit comprises a switching arrangement for recognising key activations, a call generator and an accommodating circuit for connecting signals via which the telephone is controlled.

## Revendications

1. Installation d'interphone et de sonnerie de porte avec un clavier pourvu d'une plaque d'identification au moins, ledit clavier étant relié à un dispositif d'appel dans un appartement par système de bus à microcontrôleur, **caractérisée en ce que** des affichages (7) commandés électroniquement sont appliqués comme plaques d'identification et en ce que les affichages (7) commandés électroniquement (7) sur l'installation sont raccordés à une signalisation de boîte aux lettres.

2. Installation selon revendication 1, **caractérisée en ce que** l'affichage électronique (7) comporte deux lignes de caractères.

3. Installation selon revendication 1 ou 2, **caractérisée en ce qu**'un affichage électronique commun (7) est disposé pour plusieurs plaques d'identification.

4. Installation selon l'une des revendications 1 à 3, **caractérisée en ce que** des haut-parleurs (12) sont placés dans l'immeuble et reliés au dispositif d'interphone de porte par des unités de circuit.

5. Installation selon l'une des revendications 1 à 4, **caractérisée en ce que** l'installation est reliée à au moins un téléphone raccordé à un réseau téléphonique public (14), le téléphone existant dans l'appartement étant relié à une unité de circuit téléphonique d'immeuble où est disposé un commutateur dans une position duquel le téléphone est relié au réseau téléphonique public (14) et dans l'autre position duquel celui-ci est relié à l'interphone de porte, le commutateur étant commandé depuis l'installation d'interphone de porte et/ou depuis le téléphone.

6. Installation selon l'une des revendications 1 à 5, **caractérisée en ce que** l'unité de circuit téléphonique d'immeuble comprend un dispositif de connexion pour la détection des activations de touches, un générateur d'appel et un circuit d'adaptation pour le couplage des signaux par lesquels le téléphone est commandé.
